# EUROPEAN PATENT SPECIFICATION

(11) **EP 3 099 046 B1**
(45) Date of publication and mention of the grant of the patent: **04.07.2018**
(21) Application number: 15169084.9
(22) Date of filing: 25.05.2015
(51) Int. Cl.: H04M 3/22, H04L 12/26

(54) **ARRANGEMENT, COMPUTER PROGRAM CODE AND METHOD FOR CALL DATA RECORD PROCESSING**
ANORDNUNG, COMPUTERPROGRAMMCODE UND VERFAHREN ZUR ANRUFDATENAUFZEICHNUNGSVERARBEITUNG
AGENCEMENT, CODE DE PROGRAMME INFORMATIQUE ET PROCÉDÉ DE TRAITEMENT D'ENREGISTREMENT DE DONNÉES D'APPEL

(43) Date of publication of application: 30.11.2016
(73) Proprietor: EXFO Oy, 90590 Oulu (FI)
(72) Inventor: Ikäheimo, Jorma, 90590 Oulu (FI); Hyväri, Kari, 90590 Oulu (FI); Sepponen, Jaakko, 90590 Oulu (FI); Hiltunen, Mika, 90590 Oulu (FI)
(74) Representative: Kolster Oy Ab

(56) References cited:
- US-A1- 2006 258 339
- US-A1- 2014 105 119

## Description

### Field

The invention relates to an arrangement, a computer program code and a method for call data record processing.

### Background

Monitoring of a live telecommunications network yields a massive amount of information. US 7640015 discloses processing of call data records (CDR). US 2014/0105119 discloses system and method for correlating security events with subsrcriber information in mobile network environment. However, further sophistication is desirable in order to process the information in a more efficient way.

### Brief description

The present invention seeks to provide an improved arrangement, computer program code and method.

According to an aspect of the present invention, there is provided an arrangement as specified in claim 1.

According to another aspect of the present invention, there is provided a computer program code stored on a computer-readable medium as specified in claim 13.

According to another aspect of the present invention, there is provided a method as specified in claim 14.

### List of drawings

Example embodiments of the present invention are described below, by way of example only, with reference to the accompanying drawings, in which
Figure 1 illustrates an example embodiment of monitoring a telecommunications network;
Figures 2, 3, 4 and 5 illustrate example embodiments of an arrangement;
Figures 6, 7 and 8 illustrate example embodiments of processor implementation;
Figure 9 illustrates an example embodiment of sharding;
Figure 10 is a signal sequence chart illustrating example embodiments of control plane and user plane traffic; and
Figure 11 is a flow chart illustrating example embodiments of a method.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

It should be noted that while Figures illustrate various embodiments of apparatuses, they are simplified block diagrams that only show some structures and functional entities. The connections shown in these Figures are logical connections; the actual physical connections may be different. Interfaces between the various elements may be implemented with suitable interface technologies, such as a message interface, a method interface, a sub-routine call interface, a block interface, or any hardware/software means enabling communication between functional sub-units. It is apparent to a person skilled in the art that the described apparatuses may also comprise other functions and structures. It should be appreciated that details of some functions, structures, and the protocols used for communication are irrelevant to the actual invention. Therefore, they need not be discussed in more detail here.

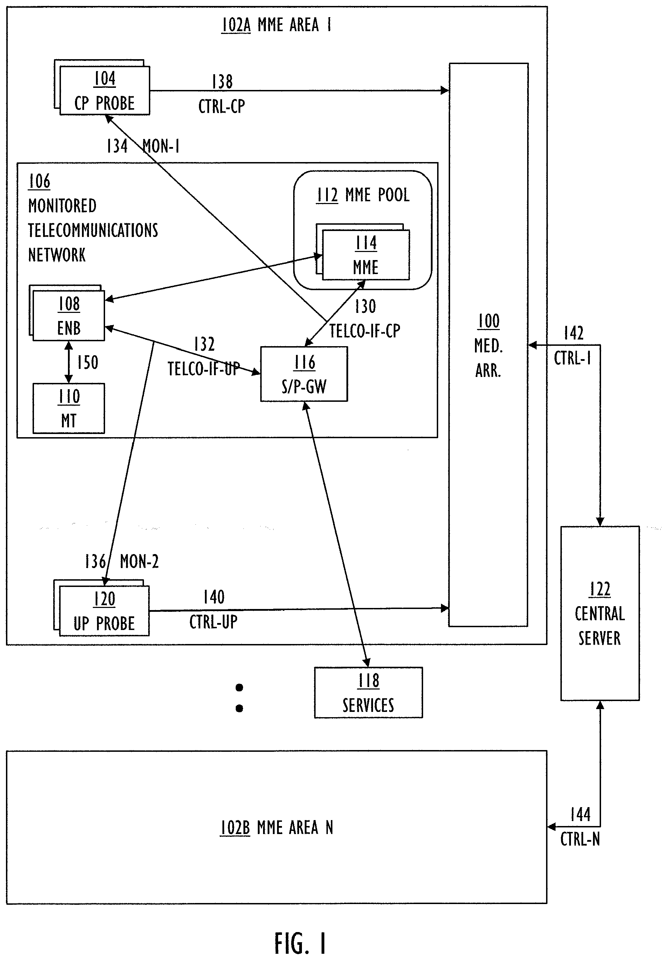

Figure 1 illustrates an example embodiment of monitoring a telecommunications network 106. The monitored telecommunications network 106 may in principle be any telecommunications network, wired or wireless, or any sub-network of such a network such as a transmission network coupling networks nodes 108, 114, 116.

In an example embodiment, a control plane probe 104 is used to monitor 134 communication in a control plane telecommunications interface 130, and a user plane probe 120 is used to monitor 136 communication in a user plane telecommunications interface 132.

In an example embodiment, the control plane telecommunications interface 130 is between a serving gateway (S-GW) 116 and a mobility management entity (MME) 114. In an example embodiment, an MME pool 112 comprises a plurality of mobility management entities 114.

In an example embodiment, the control plane telecommunications interface 130 is an S11 interface.

In an example embodiment, the user plane telecommunications interface 132 is between a base station 108 and a serving gateway / packet data network gateway (S/P-GW) 116.

In an example embodiment, the user plane telecommunications interface 132 is an S1-U interface.

The base station 108 may be called, depending on the system, a Node B, enhanced or evolved NodeB (eNB), a home eNode B (HeNB), an access point (AP), an IEEE 802.11 based access point, a femto node, a femto base station, or any other equipment belonging to the network infrastructure of the telecommunications network 106, and implementing the radio communication interface with a mobile terminal 110. Functionalities of the base station 108 may include: all radio protocols, mobility management, all retransmissions, header compression, and packet data convergence protocols. The mobility management entity 114 is a control plane entity and the user plane bypasses MME 114 directly to a serving gateway (S-GW) 116.

In addition to, or instead of, these mentioned example embodiments, the monitoring 134, 136 of the communication in the telecommunications network 106 may be directed to other interfaces as well, such as those described in various telecommunications standard specifications.

In an example embodiment, the telecommunications network 106 is monitored 134, 136 in order to examine control plane traffic 130 and user plane traffic 132 caused by a mobile terminal 110 communicating 150 with the base station 108. In an example embodiment, the mobile terminal 110 communicates (with packet data transfer, for example) with services 118 obtained through the telecommunications network infrastructure 108, 114, 116.

In an example embodiment, the mobile terminal 110 is a portable electronic communication apparatus. A non-exhaustive list of the types of the mobile terminal 110 includes: a mobile phone, a smartphone, a tablet computer, a phablet, a smartwatch, a general-purpose mobile computing device.

In an example embodiment, control plane signalling 130 is used to agree S11 GTP-C TEID and IP address pairs, APN, PDN address, Bearer context (bearer id, S1-U GTP-U TEID and IP address pairs) etc. The mobile terminal 110 may be identified with an IMSI. The connection 150 may be tracked using S11-MME GTP-C TEID and MME IP address pair and S11-SGW GTP-C TEID and SGW IP address pair.

In an example embodiment, the S1-U tunnel 132 is used to tunnel mobile traffic 150 between the eNB 108 and the S-GW 116. The tunnel 132 may be identified with S1U eNB GTP-U TEID and eNB IP address pair and S1U SGW GTP-U TEID and SWG IP address pair. The tunnel 132 may be allocated to the mobile terminal 110 using S11 control plane signalling 130. S1-U to S11 correlation may be made using tunnel identifiers that are signalled in the S11 interface 130.

The probes 104, 120 may comprise at least one network interface card to capture data packets 130, 132 from the monitored telecommunications network 106. Special high performance network interface cards are available from various vendors. The network interface card may be connected to the telecommunications network 106 passively through a connection, either using a pass-through connection or a network tap. The network interface card may timestamp and deliver data for (real-time or almost real-time) analysis or to be stored into a capture file (for non-real-time analysis). Note that in the example embodiment of Figure 1, the capture and the analysis and the mediation and the correlation are performed in separate apparatuses 104, 120, 100, in which case the captured data packets are first analysed in the probes 104, 120 and the resulting call and session records are transferred 138, 140 by a wired or wireless connection or by some other medium (such as a memory device) from the probes 104, 120 to a mediation arrangement 100.

As was explained earlier, the analysis by the probes 104, 120 may be performed in an online or offline manner. During the online analysis, packets captured by the probes 104, 120 are instantly (without unnecessary delays, i.e., in real-time or near real-time) analysed. In the offline analysis, the packets are first recorded into the capture file, and, after an undefined period, the capture file is imported to the arrangement 100 by an input/output 230, by a communication interface 232, for example. As a result of the analysis in the control plane probe 104, a plurality of control plane call and session records CP-XDR 138 is produced and transferred to the arrangement 100 for mediation and correlation. As a result of the analysis in the user plane probe 120, a plurality of user plane session records UP-XDR 140 is produced and transferred to the arrangement 100 for mediation and correlation.

In an example embodiment, the probes 104, 120 comprise a computer running protocol analyzer software. The software may be modified from existing protocol analyzer software such as EXFO PowerHawk Pro.

In an example embodiment, the mediation arrangement 100 may be responsible for one or more MME areas 102A, 102B, and the mediation arrangement 100 may transfer 142, 144 the results to a central server 122.

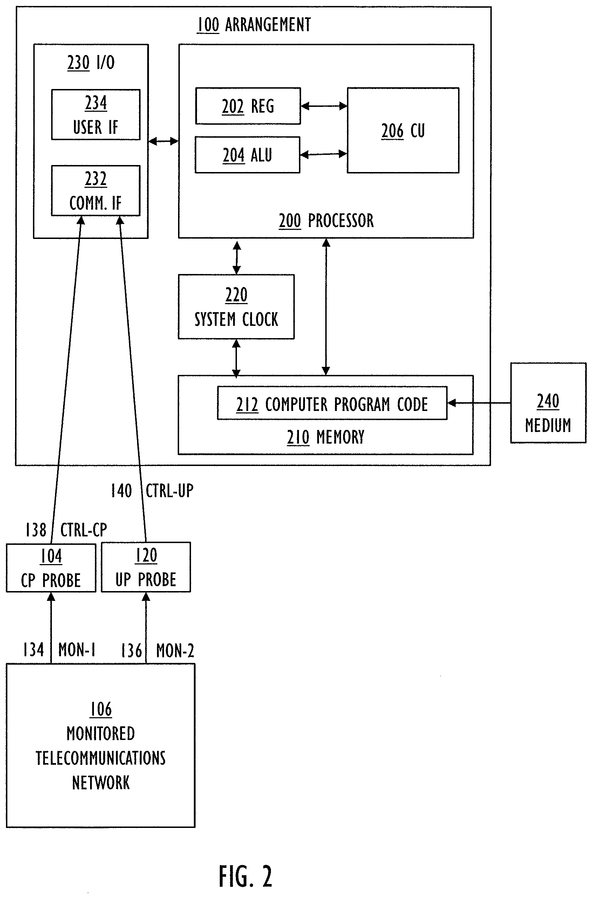

With reference to Figure 2, let us study the structure of the arrangement 100 in more detail.

The arrangement 100 may be any electronic arrangement capable of processing data as described in the following. A non-exhaustive list of the types of the arrangement 100 includes: one or more electronic digital computers, one or more desktop computers, one or more portable computers, one or more laptop computers, one or more tablet computers, or any other electronic arrangement performing the processing such as at least one rack-mounted processing unit, or any combination of these various computing resources. The arrangement 100 may employ an operating system such as Microsoft Windows, Apple Mac OS X, or Linux, for example. Besides being a single apparatus, the arrangement 100 may be implemented in a distributed fashion employing communicatively coupled sub-units.

In an example embodiment, the software may implement a user interface 234 with suitable hardware, which allows controlling the operations of the arrangement 100 and monitoring the results of the operations carried out by the arrangement 100.

The arrangement 100 comprises one or more processors 200 and one or more memories 210 including computer program code 212. The one or more memories 210 and the computer program code 212 are configured to, with the one or more processors 200, cause the arrangement 100 to perform various operations described later.

The term 'processor' 200 refers to a device that is capable of processing data. Depending on the processing power needed, the arrangement 100 may comprise several processors 200 such as parallel processors or a multicore processor. When designing the implementation of the processor 200, a person skilled in the art will consider the requirements set for the size and power consumption of the arrangement 100, the necessary processing capacity, production costs, and production volumes, for example.

The term 'memory' 210 refers to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

The processor 200 and the memory 210 may be implemented by an electronic circuitry. A non-exhaustive list of implementation techniques for the processor 200 and the memory 210 includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

In an example embodiment, a system clock 220 constantly generates a stream of electrical pulses, which cause the various transferring operations within the arrangement 100 to take place in an orderly manner and with specific timing.

In an example embodiment, the processor 200 may be implemented as a microprocessor implementing functions of a central processing unit (CPU) on an integrated circuit. The CPU is a logic machine executing the computer program code 212. The computer program code 212 may be coded as a computer program using a programming language, which may be a high-level programming language, such as C, C++, or Java, or a low-level programming language, such as a machine language, or an assembler, for example. The CPU may comprise a set of registers 202, an arithmetic logic unit (ALU) 204, and a control unit (CU) 206. The control unit 206 is controlled by a sequence of the computer program code 212 transferred to the CPU from the (working) memory 210. The control unit 206 may contain a number of microinstructions for basic operations. The implementation of the microinstructions may vary, depending on the CPU design. The microprocessor 200 may also have an operating system (a dedicated operating system of an embedded system, a real-time operating system, or even a general-purpose operating system), which may provide the computer program code 212 with system services.

The computer program code 212 may be implemented by software and/or hardware. In an example embodiment, the software may be written by a suitable programming language, and the resulting executable code 212 may be stored on the memory 210 and run by the processor 200.

An example embodiment provides a computer-readable medium 240 comprising a computer program comprising the computer program code 212 which, when loaded into the arrangement 100 causes the arrangement to perform the described example embodiments. The example embodiments of the arrangement 100 may be used to enhance the operation of the computer program code 212. There are many ways to structure the computer program code 212. In an example embodiment, the operations of the computer program code 212 may be divided into functional modules, sub-routines, methods, classes, objects, applets, macros, etc., depending on the software design methodology and the programming language used. In modern programming environments, there are software libraries, i.e. compilations of ready-made functions, which may be utilized by the computer program code 212 for performing a wide variety of standard operations. In an example embodiment, the computer program code 212 may be in source code form, object code form, executable file, or in some intermediate form. The computer-readable medium 240 may comprise at least the following: any entity or device capable of carrying computer program code 212 to the arrangement 100, a record medium, a computer memory, a read-only memory, an electrical carrier signal, a telecommunications signal, and a software distribution medium. In some jurisdictions, depending on the legislation and the patent practice, the computer-readable medium 240 may not be the telecommunications signal. In an example embodiment, the computer-readable medium 240 may be a non-transitory computer-readable storage medium.

In an example embodiment, the functionality of the hardware may be designed by a suitable hardware description language (such as Verilog or VHDL), and transformed into a gate-level netlist (describing standard cells and the electrical connections between them), and after further phases the chip implementing the processor 200, memory 210 and the code 212 of the arrangement 100 may be fabricated with photo masks describing the circuitry.

In an example embodiment, the processor 200 and the memory 210 are separate entities, communicatively coupled together by an appropriate serial bus, for example. In general interfaces between the various elements may be implemented with suitable interface technologies, such as a message interface, a method interface, a sub-routine call interface, a block interface, an appropriate serial/parallel bus, or any hardware/software means enabling communication between various sub-units of the arrangement 100.

The one or more memories 210 and the computer program code 212 are configured to, with the one or more processors 200, cause the arrangement 100 to obtain a plurality of control plane call and session records CP-XDR 138 produced by analysing communication in the monitored telecommunications network 106 (by the CP probe 104), and aggregate control plane call data records CP-CDR from control plane call and session records CP-XDR on the basis of a subscriber identifier, each control plane call data record CP-CDR comprising a subscriber identifier as a key and further comprising one or more protocol addresses.

In an example embodiment, the subscriber identifier comprises an international mobile subscriber identity (IMSI).

In an example embodiment, the protocol address comprises an Internet protocol IP address of a mobile subscriber identified by the subscriber identifier and a GPRS tunnelling protocol tunnel endpoint identifier GP-TEID.

The one or more memories 210 and the computer program code 212 are configured to, with the one or more processors 200, cause the arrangement 100 to create a control plane data structure comprising subscriber identifier-protocol address -pairs gathered from the control plane call data records CP-CDR.

The one or more memories 210 and the computer program code 212 are configured to, with the one or more processors 200, cause the arrangement 100 to obtain a plurality of user plane call and session records UP-XDR 140 produced by analysing communication in the monitored telecommunications network 106 (by the UP probe 120), and aggregate the user plane call and session records UP-XDR on the basis of the control plane data structure.

The probes 104, 120 produce call and session records XDRs, both for the control plane and the user plane. XDRs represent calls and session with very high detail level and user plane records do not include information about the subscriber. Consequently, the XDRs are correlated and aggregated to higher abstraction level call data records CDRs containing all relevant information for network monitoring. The example embodiments provide scalable high performance mediation (correlation and aggregation) of control and user plane call and session records XDRs to provide CDRs.

The user plane probe 120 may provide comma separated value (CSV) formatted subscriber records, i.e., user plane UP XDRs, containing all transport layer IP address+TEID pairs captured during the monitoring period. The UP XDRs may contain volume, jitter, and other similar information for at least top applications.

The control plane probe 104 may provide CSV formatted control plane CP XDRs containing interface specific session records containing IMSI, transport layer IP+TEID pairs and validity times, cells, and session end failure causes. In order to separate success causes from failure causes, CP XDRs may include a configurable list of failure causes per cause type. Each CP XDR may include at least IMSI and new/removed transport layer IP+TEID info and currently valid transport layer IP+TEID info.

CP and UP XDRs are correlated and aggregated to CDRs that are provided to the central server 122 for displaying the network state.

Mediation may be pipelined through multiple steps. A split step splits the CSV records to multiple files to allow separate processing of results in multiple mediation functions. A correlate step extracts IMSI, IP+TEID information and correlates UP to CP using it. An aggregate step writes results to CDR files.

The mediation may be done as follows:
In step 1, IP+TEID map is created on bases of CP XDRs containing data for the monitoring period. IP+TEID is the key, value is CDR. There may be multiple simultaneous processes, processing IMSI sharded (splitted) CSV file chains.

In step 2, CDRs are enriched with UP data. There may be multiple simultaneous enrichment processes processing IP+TEID shared CSV file chains. Processing handles CDRs for the whole period at once.

In step 3, CDRs are written to one or multiple IMSI sharded CDR CSV files. There can be multiple write processes running simultaneously.

Processing may be pipelined per batch, after completing previous period processing stage, processing of the next period stage is started immediately when data is available.

The scaling may be done as follows:
CP XDRs are split by multiple IMSI groups by a modulo of a hash key.

Each IMSI group is assigned for a certain mediation process.

UP XDRs are provided to every mediation process, this may be done, because UP XDRs contain low volume subscriber records.

Bottleneck in this arrangement 100 may be in providing UP XDRs to every mediation process, but it is not a problem because 1 million subscribers provide 1000-10000 records per second, and one mediation process processes easily 100000 XDRs. So the arrangement 100 scales well to very large MME sites containing even tens of millions of subscribers.

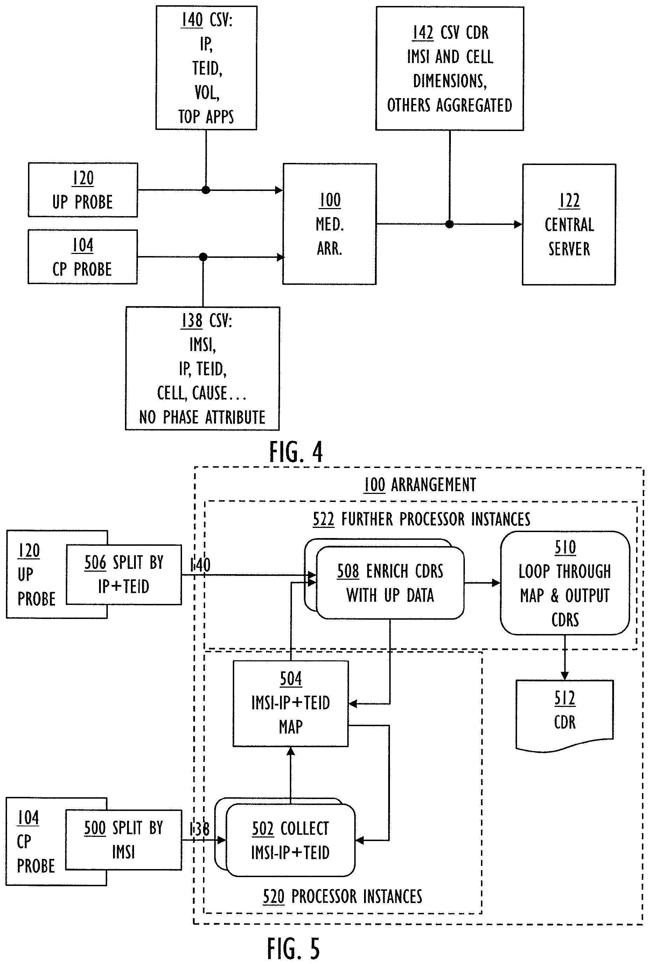

In an example embodiment, the plurality of the control plane call and session records CP-XDR 138 is obtained from analysing (by the CP probe 104) the communication in the first link 130 between the serving gateway 116 and the mobility management entity 114 in the monitored telecommunications network 106, and the plurality of the user plane call and session records UP-XDR 140 is obtained from analysing (by the UP probe 120) the communication in the second link 132 between the base station 108 and the serving gateway and/or the packet data network gateway 116 in the monitored telecommunications network 106. This example embodiment is illustrated in Figure 4. In an example embodiment, the plurality of the control plane call and session records CP-XDR 138 and the plurality of the user plane call and session records UP-XDR 140 are each stored in a file including comma-separated values (CSV) in plain-text form as records. In an example embodiment, the call data records CDR 142 may also be stored in a file including comma-separated values in plain-text.

In an example embodiment, the input 138, 140 may be provided as compressed CSV files in up to 7 different formats:
- LTE signalling protocols: S1-AP (S1 interface), X2-AP (X2 interface), and GTPC (S5/S8, S4, S3, S10, S11 interfaces);
- PS Core signalling protocols: Gb, luPS, and Gn;
- User plane (common format for LTE and PS Core): DPI output from S1-U, S5/S8 and Gn user plane interfaces.

In an example embodiment, the output 142 may be provided as three CSV format CDRs: LTE control plane CDRs enriched with data volumes, PS Core control plane CDRs enriched with data volumes, and user plane usage CDRs enriched with subscriber and network information from signalling.

**Table 1: CP-XDR**

| **Attribute** | **Description** |
|---|---|
| Id | Session id |
| Starttime | Session start time |
| Endtime | Session end time |
| Timestamp | Time when the XDR was exported |
| S11_Phase | Telecom interface specific session phase |
| IMSI | International Mobile Subscriber Identity |
| IMEI | International Mobile Equipment Identity |
| MSISDN | Mobile Station International Subscriber Directory Number |
| TAC | Tracking area code |
| GTPC_Cause | GTP-C cause code |
| GTPC_FCause | GTP-C forward cause code |
| S1U_eNB_IP_Address | S1-U ENB IP address |
| S1U_SGW_IP_Address | S1-U SGW IP address |
| S1 U_eNB_TEID | S1-U ENB TEID |
| S1U_SGW_TEID | S1-U SGW TEID |

In an example embodiment, XDR files are produced in batches (the period of each batch may be configurable, from 5 to 15 minutes, for example) with one file produced per protocol and probe 104, 120. There may be several files for the same protocol in case there are several probes 104, 120 capturing the same interfaces. Output data is provided in batches with one file type produced per output format.

Table 1 illustrates an example embodiment of the control plane and session record CP-XDR 138: the first column gives a name for an attribute and the second column gives a short description for the attribute.

**Table 2: S11_phase values**

| **S11_PHASE** |
|---|
| CREATE SESSION ATTEMPT |
| SESSION CREATED |
| CREATE SESSION FAILED |
| DELETE SESSION ATTEMPT |
| SESSION DELETED |
| DELETE SESSION FAILED |
| CREATE BEARER ATTEMPT |
| BEARER CREATED |
| CREATE BEARER FAILED |
| MODIFY BEARER ATTEMPT |
| BEARER MODIFIED |
| BEARER MODIFICATION FAILED |
| UPDATE BEARER ATTEMPT |
| BEARER UPDATED |
| BEARER UPDATE FAILED |
| BEARER DELETED |
| BEARER DELETE FAILED |
| CREATE BEARER RESOURCE |
| BEARER RESOURCE CREATION FAILED |
| MODIFY BEARER RESOURCE |
| BEARER RESOURCE MODIFICATION FAILED |
| DELETE BEARER RESOURCE |
| BEARER RESOURCE DELETION FAILED |
| ACCESS BEARER RELEASE ATTEMPT |
| ACCESS BEARER RELEASED |
| ACCESS BEARER RELEASED FAILED |
| RELOCATING |
| RELOCATED |
| RELOCATION FAILED |
| RELOCATION CANCEL ATTEMPT |
| RELOCATION CANCELLED |
| RELOCATION CANCEL FAILED |
| IDENTIFYING |
| IDENTIFIED |
| IDENTIFICATION FAILED |
| MME CONTEXT REQUEST |
| MME CONTEXT ESTABLISHED |
| MME CONTEXT FAILED |
| FORWARDING MME CONTEXT |
| MME CONTEXT FORWARDED |
| FORWARDING MME CONTEXT FAILED |
| ERROR INDICATION |
| DELETE BEARER ATTEMPT |
| DOWNLINK DATA NOTIFICATION ATTEMPT |
| DOWNLINK DATA NOTIFICATION SUCCESSFUL |
| DOWNLINK DATA NOTIFICATION FAILED |
| DOWNLINK DATA NOTIFICATION FAILURE INDICATION |
| DELETE PDN CONNECTION SET ATTEMPT |
| DELETE PDN CONNECTION SET SUCCESSFUL |
| DELETE PDN CONNECTION SET FAILED |

Table 2 lists possible session values for the S11_phase attribute of the CP-XDR 138.

**Table 3: UP flow record**

| **Timestamp** | Time when flow was exported |
|---|---|
| **Src** | IP source address |
| **Dst** | IP destination address |
| **Protocol** | IP protocol |
| **TunSrc** | Mobile IP source address, use to identify a change in IMSI - TEID mapping |
| **TunDst** | Mobile IP destination address, use to identify a change in IMSI - TEID mapping |
| **GTPTEID** | GTP TEID |
| **sum(eth.tot_len)** | Total volume of octets seen in flow |
| **count(eth.tot_len)** | Count of packets |
| **avg(tcp.rtt)** | TCP response time. Average of Network response time (syn-synack-ack process). |
| **avg(tcp.rtt_app)** | TCP application response time. Average of Application response time of the server, calculated between a non-empty client packet, and the acknowledgement of a non-empty server packet. |
| **avg(http.rtt)** | Average server response time, calculated between the HTTP Request, and the client acknowledgement of the first non-empty HTTP Response packet. |
| **sum(tcp.retransmission_bytes)** | TCP retransmitted bytes. Sum of retransmission bytes that is current packet overlapping bytes count, extracted when out-of-order TCP sequence occurs. |
| **avg(dns.response_time)** | DNS response time. Average of Elapsed time between sending of the dns request and reception of its response. |
| **http.code:d** | Last HTTP response code. |
| **count(rtp.lost)** | RTP count of lost packets. |
| **avg(base.jitter)** | Jitter Average of Variation of delay compared to the last processed packet (calculated per half-session). |
| **dns.reply_code:d** | DNS server reply code |
| **sip.reply_code:d** | SIP reply code |
| **base.application_id:d** | Application type ID |

Table 3 illustrates an example embodiment of a user plane flow record containing information from a single, unidirectional flow.

**Table 4: Aggregated UP flow record**

| | |
|---|---|
| **Timestamp** | Time when record was exported |
| **Src** | IP source address |
| **Dst** | IP destination address |
| **GTPTEID** | GTP TEID |
| **sum(eth.tot_len)** | Total volume of octets |
| **count(eth.tot_len)** | Count of packets |
| **avg(tcp.rtt)** | TCP response time. Average of Network response time (syn-synack-ack process). |
| **avg(tcp.rtt_app)** | TCP application response time. Average of Application response time of the server, calculated between a non-empty client packet, and the acknowledgement of a non-empty server packet. |
| **avg(http.rtt)** | Average server response time, calculated between the HTTP Request, and the client acknowledgement of the first non-empty HTTP Response packet. |
| **sum(tcp.retransmission_bytes)** | TCP retransmitted bytes. Sum of retransmission bytes that is current packet overlapping bytes count, extracted when out-of-order TCP sequence occurs. |
| **avg(dns.response_time)** | DNS response time. Average of Elapsed time between sending of the dns request and reception of its response. |
| **http.code:d** | Last HTTP response code. |
| **count(rtp.lost)** | RTP count of lost packets. |
| **avg(base.jitter)** | Jitter Average of Variation of delay compared to the last processed packet (calculated per half-session). |
| **dns.reply_code:d** | DNS server reply code |
| **sip.reply_code:d** | SIP reply code |
| **base.application_id:d** | Application type ID |

Table 4 illustrates an example embodiment of a user plane aggregated flow record containing aggregated information from all flows captured during the monitoring period, record per Src/Dst/TEID/application (http, SIP, DNS etc.).

CDR may be an aggregated record per IMSI containing the selected information from CP XDRs from selected telecom interfaces and from aggregated UP flow records.

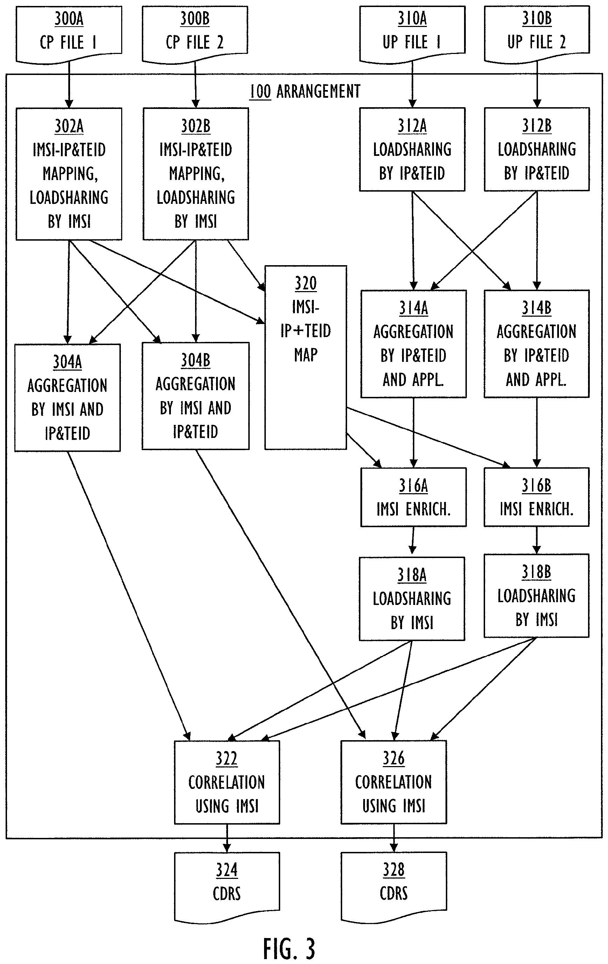

Figure 3 illustrates an example embodiment of processing. Let us suppose that there are two control plane files 300A, 300B and two user plane files 310A, 310B.

The control plane files 300A, 300B are processed by blocks 302A, 302B, which perform the IMSI-IP&TEID -mapping and loadsharing by IMSI. Blocks 304A, 304B perform aggregation by IMSI and IP&TEID for the control plane data 300A, 300B. In an example embodiment, the control plane call data records CP-CDR are aggregated such that control plane call and session records including the same subscriber identifier are aggregated together.

The user plane files 310A, 310B are processed by blocks 312A, 312B, which perform the loadsharing by IP&TEID. Next, blocks 314A, 314B perform aggregation by the IP&TEID and application. In an example embodiment, the user plane call and session records UP-XDR are aggregated such that user plane call and session records including the same protocol address are aggregated together. In an example embodiment, if there is more than one subscriber identifier-protocol address pair with the same subscriber identifier (a single IP&TEID may have multiple IMSIs, for example), an aggregated user plane call and session record is created for each subscriber identifier, each such aggregated user plane call and session record further comprising a mobile Internet protocol layer address. Blocks 316A, 316B provide IMSI enrichment with the IMSI-IP&TEID -map 320 obtained from the control plane blocks 302A, 302B. Blocks 318A, 318B perform loadsharing by IMSI.

Finally, blocks 322 and 326 perform correlation and aggregation using IMSI, in order to produce control plane call data records CP-CDR 324 and user plane call data records UP-CDR 328.

Figure 5 illustrates a different example embodiment, wherein the user plane call and session records UP-XDR are aggregated such that call data records CDR 512 are created on the basis of the control plane call data records CP-CDR and aggregated user plane call and session records UP-XDR such that each control plane call data record CP-CDR is supplemented with the aggregated user plane call and session records UP-XDR. As shown in Figure 5, control plane call and session records CP-XDR 138 are split 500 by IMSI and provided to block 502, which aggregates them into control plane call data records CP-CDR (merged per IMSI), and provides an IMSI-IP+TEID -map 504 to block 508, which enriches control plane call data records CP-CDR with aggregated user plane call and session records UP-XDR obtained from a splitter block 506. In block 510, the IMSI-IP+TEID -map 504 is looped through and the call data records 512 are outputted.

Figure 5 also illustrates an example embodiment, wherein the plurality of the control plane call and session records CP-XDR 138 is partitioned 500 for a plurality of processor instances 520 and the aggregation 520 of the control plane call data records CP-CDR and the creation 504 of the control plane data structure is performed by the plurality of the processor instances 520, and wherein the plurality of the user plane call and session records UP-XDR 140 is partitioned for a plurality of further processor instances 522 and the aggregation 508 of the user plane call and session records UP-XDR is performed by the plurality of the further processor instances 522.

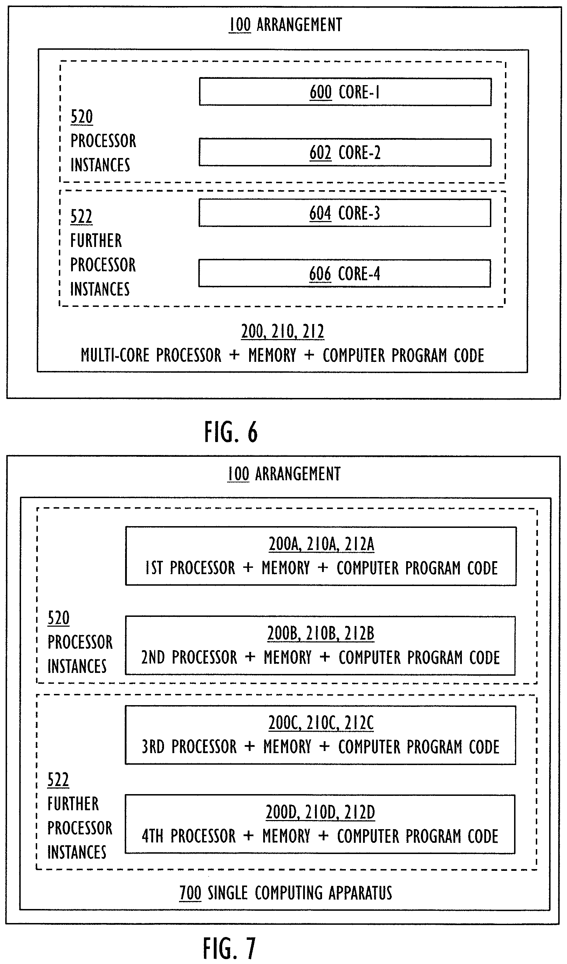

Figures 6, 7 and 8 illustrate example embodiments of the processor instances 520 and the further processor instances 522.

In Figure 6, the plurality of the processor instances 520 and the plurality of the further processor instances 522 comprises cores 600, 602, 604, 606 of a multi-core microprocessor 200 (and its memory 210 and computer program code 212). Note that the number of the cores 600, 602, 604, 606 is just a non-limiting example embodiment as there may be be less or more cores 600, 602, 604, 606. The multi-core microprocessor is a single computing component with two or more independent actual processing units (= cores) reading and executing the computer program code. Typical number of the cores 600, 602, 604, 606 is two, four, six, eight, ten, or even more.

In Figure 7, the plurality of the processor instances 520 and the plurality of the further processor instances 522 comprises microprocessors 200A, 200B, 200C, 200D (and their memories 210A, 210B, 210C, 210D and computer program code 212A, 212B, 212C, 212D) within a single computing apparatus 700. Note that the number of the microprocessors 200A, 200B, 200C, 200D is just a non-limiting example embodiment as there may be be less or more microprocessors 200A, 200B, 200C, 200D.

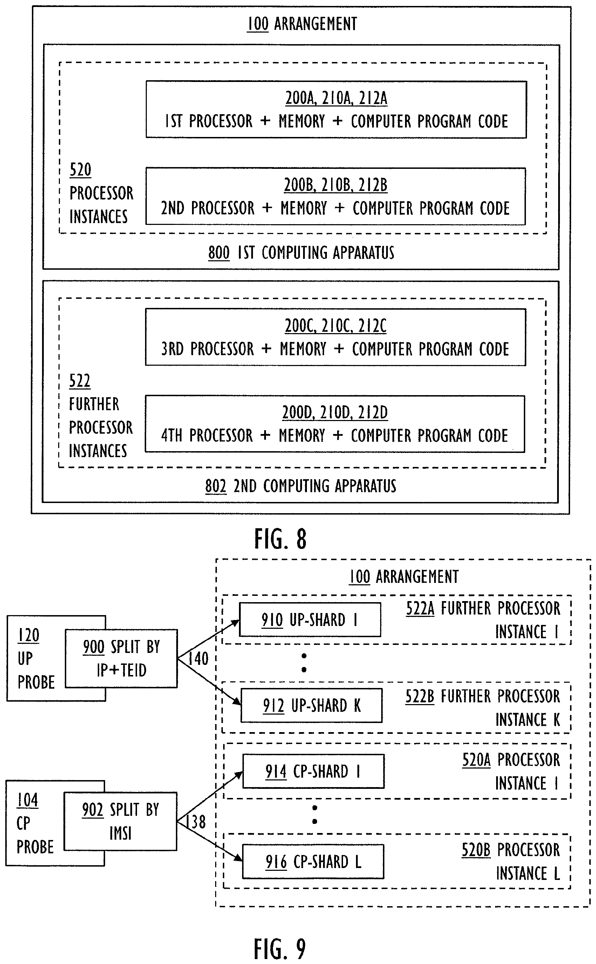

In Figure 8, the plurality of the processor instances 520 and the plurality of the further processor instances 522 comprises microprocessors 200A, 200B, 200C, 200D (and their memories 210A, 210B, 210C, 210D and computer program code 212A, 212B, 212C, 212D) within at least two separate computing apparatuses 800, 802. Note that the number of the microprocessors 200A, 200B, 200C, 200D is just a non-limiting example embodiment as there may be be less or more microprocessors 200A, 200B, 200C, 200D.

In an example embodiment of Figure 9, the partition is done by sharding the plurality of the control plane call and session records CP-XDR 138 into control plane shards 914, 916 and the plurality of the user plane call and session records UP-XDR 140 into user plane shards 910, 912. As shown in Figure 9, the number of the user plane shards 910, 912 (and the number of the further processor instances 522A, 522B) may vary from 1 to K, wherein K is any integer greater than one, and the number of the control plane shards 914, 916 (and the number of the processor instances 520A, 520B) may vary from 1 to L, wherein L is any integer greater than one. Each processor instance 520A, 520B processes its control plane shard 914, 916 and each further processor instance 522A, 522B its user plane shard 910, 912. Each (database) shard 910, 912, 014, 916 is a horizontal partition of data in order to spread the processing load among the processor instances 520A, 520B and the further processor instances 522A, 522B.

In an example embodiment, the processing is performed in two parallel computing pipelines such, that the plurality of the control plane call and session records CP-XDR 138 is obtained in a first batch file for the first computing pipeline and the aggregation of the control plane call data records CP-CDR and the creation of the control plane data structure is performed in the first computing pipeline, and that the plurality of the user plane call and session records UP-XDR 140 is obtained in a second batch file for the second computing pipeline and the aggregation of the user plane call and session records UP-XDR is performed in the second computing pipeline, whereupon the results of the aggregations are stored in a result file, and, finally, the computing pipelines obtain the next first and second batch files for the processing. Each pipeline is a set of data processing elements connected in series. The elements of a pipeline may be executed in parallel or in a time-sliced fashion, for example. In Figure 5, for example, the processor instance(s) 520 may form the first computing pipeline(s), and the further processor instance(s) 522 may form the second computing pipeline(s).

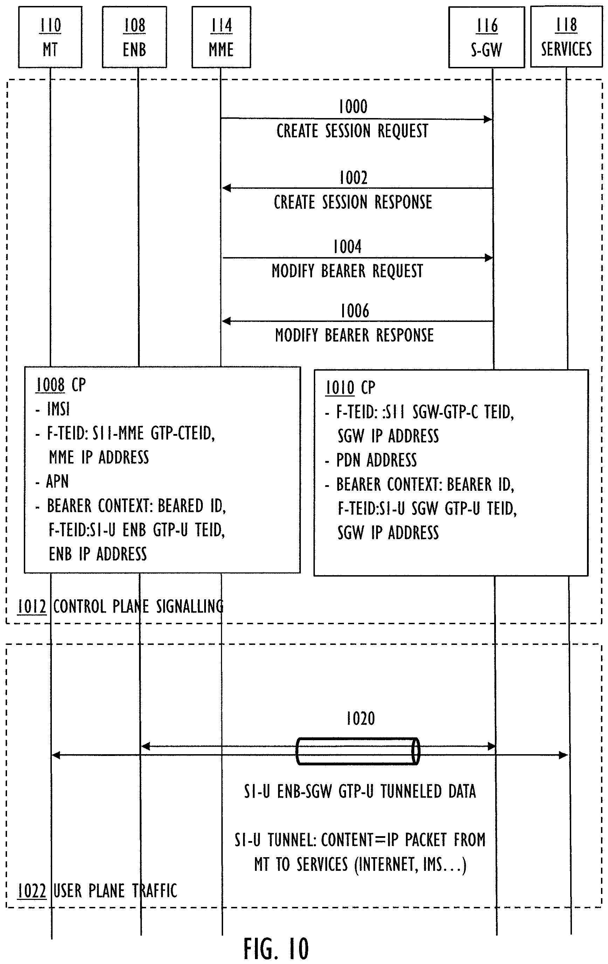

Figure 10 illustrates an example embodiment, wherein the control plane call and session records CP-XDR 138 are produced by analysing control plane signalling 1012 in S11 interface and the user plane call and session records UP-XDR 140 from user plane traffic 1022 in S1-U interface.

The mobility management entity 114 communicates 1000, 1002, 1004, 1006 with the serving gateway 116 in order to create a communication session with its bearer(s) as defined by the attributes 1008, 1010 including the subscriber identifier (IMSI), protocol addresses (Fully Qualified TEID F-TEID) and other relevant information such as Access Point Name APN, PDN (Packet Data Network) Address and Bearer context. The user plane traffic 1022 is performed in an S1-U tunnel 1020 between the mobile terminal 110 and the services 118 utilizing S1-U ENB-SGW GTP-U tunnelled data.

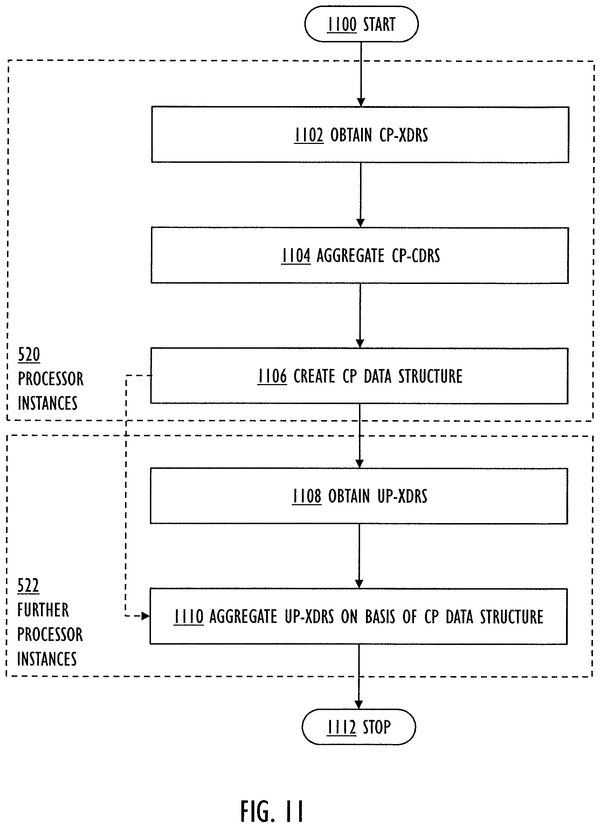

Next, let us study Figure 11 illustrating a method performed in at least one computing resource. The operations are not strictly in chronological order, and some of the operations may be performed simultaneously or in an order differing from the given ones. Other functions may also be executed between the operations or within the operations and other data exchanged between the operations. Some of the operations or part of the operations may also be left out or replaced by a corresponding operation or part of the operation. It should be noted that no special order of operations is required, except where necessary due to the logical requirements for the processing order.

The method starts in 1100 as the computing resource(s) is switched on and it starts to process data.

In 1102, a plurality of control plane call and session records produced by analysing communication in a monitored telecommunications network are obtained.

In 1104, control plane call data records are aggregated from control plane call and session records on the basis of a subscriber identifier. Each control plane call data record comprises a subscriber identifier as a key and further comprising one or more protocol addresses.

In 1106, a control plane data structure comprising subscriber identifier-protocol address -pairs gathered from the control plane call data records is created.

In 1108, a plurality of user plane call and session records produced by analysing communication in the monitored telecommunications network are obtained.

In 1110, the user plane call and session records are aggregated on the basis of the control plane data structure.

The method ends in 1112 if the computing resource(s) is switched off, or the method may also be suspended after all data is processed until the next not yet processed data is obtained.

The already described example embodiments of the arrangement 100 may be utilized to enhance the method with various further example embodiments. For example: the operations 1102, 1104 and 1106 may be performed by the processor instances 520 and the operations 1108 and 1110 by the further processor instances 522.

The invention and its embodiments are not limited to the example embodiments described above but only by the appended claims.

## Claims

1. An arrangement (100) comprising:
one or more processors (200); and
one or more memories (210) including computer program code (212),
the one or more memories (210) and the computer program code (212) configured to, with the one or more processors (200), cause the arrangement (100) at least to:
obtain a plurality of call and session records (CP-XDR, 138) of a control plane produced by analysing communication in a monitored telecommunications network (106);
aggregate call data records (CP-CDR) of the control plane from call and session records (CP-XDR) of the control plane on the basis of a subscriber identifier, each call data record (CP-CDR) of the control plane comprising a subscriber identifier as a key and further comprising one or more protocol addresses of a mobile subscriber identified by the subscriber identifier;
create a control plane data structure comprising subscriber identifier-protocol address -pairs gathered from the call data records (CP-CDR) of the control plane;
obtain a plurality of call and session records (UP-XDR, 140) of a user plane produced by analysing communication in the monitored telecommunications network (106); and
aggregate the call and session records (UP-XDR) of the user plane on the basis of the control plane data structure such that call and session records (UP-XDR) of the user plane including the same protocol address are aggregated together.

2. The arrangement of claim 1, wherein the call data records (CP-CDR) of the control plane are aggregated such that call and session records (CP-XDR) of the control plane including the same subscriber identifier are aggregated together.

3. The arrangement of claim 1 or 2, wherein, if there is more than one subscriber identifier-protocol address pair with the same subscriber identifier, create an aggregated call and session record of the user plane for each subscriber identifier, each such aggregated call and session record of the user plane further comprising a mobile Internet protocol layer address.

4. The arrangement of any preceding claim, wherein the call and session records (UP-XDR) of the user plane are aggregated such that call data records CDR, (512) are created on the basis of the call data records (CP-CDR) of the control plane and aggregated call and session records (UP-XDR) of the user plane such that each call data record (CP-CDR) of the control plane is supplemented with the aggregated call and session records (UP-XDR) of the user plane.

5. The arrangement of any preceding claim, wherein the plurality of the call and session records (CP-XDR) of the control plane is partitioned (500) for a plurality of processor instances (520) and the aggregation (520) of the call data records (CP-CDR) of the control plane and the creation (504) of the control plane data structure is performed by the plurality of the processor instances (520), and wherein the plurality of the call and session records (UP-XDR) of the user plane is partitioned for a plurality of further processor instances (522) and the aggregation (508) of the call and session records (UP-XDR) of the user plane is performed by the plurality of the further processor instances (522).

6. The arrangement of claim 5, wherein the plurality of the processor instances (520) and the plurality of the further processor instances (522) comprises one or more of the following: cores (600, 602, 604, 606) of a multi-core microprocessor (200), microprocessors (200A, 200B, 200C, 200D) within a single computing apparatus (700), microprocessors (200A, 200B, 200C, 200D) within at least two separate computing apparatuses (800, 802).

7. The arrangement of claim 5 or 6, wherein the partition is done by sharding the plurality of the call and session records (CP-XDR) of the control plane into control plane shards (914, 916) and the plurality of the call and session records (UP-XDR) of the user plane into user plane shards (910, 912), and wherein each processor instance processes (520A, 520B) its control plane shard (914, 916) and each further processor instance (522A, 522B) its user plane shard (910, 912).

8. The arrangement of any preceding claim, wherein the subscriber identifier comprises an international mobile subscriber identity IMSI.

9. The arrangement of any preceding claim, wherein the protocol address comprises an Internet protocol IP address of a mobile subscriber identified by the subscriber identifier and a GPRS tunnelling protocol tunnel endpoint identifier (GP-TEID).

10. The arrangement of any preceding claim, wherein the processing is performed in two parallel computing pipelines such, that the plurality of the call and session records (CP-XDR) of the control plane is obtained in a first batch file for the first computing pipeline and the aggregation of the call data records (CP-CDR) of the control plane and the creation of the control plane data structure is performed in the first computing pipeline, and that the plurality of the call and session records (UP-XDR) of the user plane is obtained in a second batch file for the second computing pipeline and the aggregation of the call and session records (UP-XDR) of the user plane is performed in the second computing pipeline, whereupon the results of the aggregations are stored in a result file, and, finally, the computing pipelines obtain the next first and second batch files for the processing.

11. The arrangement of any preceding claim, wherein the plurality of the call and session records (CP-XDR) of the control plane is obtained from a first link (130) between a a serving gateway (116) and a mobility management entity (114) in the monitored telecommunications network (106), and the plurality of the call and session records (UP-XDR) of the user plane is obtained from a second link (132) between a base station (108) and a serving gateway and/or a packet data network gateway (116) in the monitored telecommunications network (106).

12. The arrangement of any preceding claim, wherein the plurality of the call and session records (CP-XDR) of the control plane and the plurality of the call and session records (UP-XDR) of the user plane are each stored in a file including comma-separated values CSV in plain-text form as records.

13. A computer program code stored on a computer-readable medium (240), which computer program code (212), when executed on one or more computing apparatuses, causes the one or more computing apparatuses (800, 802) to perform according to any preceding claim 1 to 12.

14. A method comprising:
obtaining (1102) a plurality of call and session records (CP-XDR) of a control plane produced by analysing communication in a monitored telecommunications network;
aggregating (1104) call data records (CP-CDR) of the control plane from call and session records (CP-XDR) of the control plane on the basis of a subscriber identifier, each call data record (CP-CDR) of the control plane comprising a subscriber identifier as a key and further comprising one or more protocol addresses of a mobile subscriber identified by the subscriber identifier;
creating (1106) a control plane data structure comprising subscriber identifier-protocol address -pairs gathered from the call data records (CP-CDR) of the control plane;
obtaining (1108) a plurality of call and session records (UP-XDR) of a user plane produced by analysing communication in the monitored telecommunications network; and
aggregating (1110) the call and session records (UP-XDR) of the user plane on the basis of the control plane data structure such that call and session records (UP-XDR) of the user plane including the same protocol address are aggregated together.

## Patentansprüche

1. Anordnung (100), umfassend:
einen oder mehrere Prozessoren (200); und
einen oder mehrere Speicher (210), die Computerprogrammcode (212) umfassen,
wobei der eine oder die mehreren Speicher (210) und der Computerprogrammcode (212) dazu eingerichtet sind, mit dem einen oder den mehreren Prozessoren (200) die Anordnung (100) zu veranlassen, wenigstens:
eine Vielzahl von Ruf- und Sitzungsaufzeichnungen (CP-XDR, 138) einer Steuerebene zu ermitteln, die durch Analysieren der Kommunikation in einem überwachten Telekommunikationsnetzwerk (106) erzeugt werden;
Rufdatenaufzeichnungen (CP-CDR) der Steuerebene aus Ruf- und Sitzungsaufzeichnungen (CP-XDR) der Steuerebene auf der Basis einer Teilnehmerkennung anzuhäufen, wobei jede Rufdatenaufzeichnung (CP-CDR) der Steuerebene eine Teilnehmerkennung als Schlüssel umfasst und weiterhin eine oder mehrere Protokolladressen eines durch die Teilnehmerkennung identifizierten Mobilfunkteilnehmers umfasst;
eine Steuerebenendatenstruktur zu erzeugen, die Teilnehmerkennungs-Protokolladressen-Paare umfasst, die aus den Rufdatenaufzeichnungen (CP-GDR) der Steuerebene gesammelt werden;
eine Vielzahl von Ruf- und Sitzungsaufzeichnungen (UP-XDR, 140) einer Benutzerebene zu ermitteln, die durch Analysieren der Kommunikation in dem überwachten Telekommunikationsnetzwerk (106) erzeugt werden; und
die Ruf- und Sitzungsaufzeichnungen (UP-XDR) der Benutzerebene auf der Basis der Steuerebenen-Datenstruktur anzuhäufen, so dass Ruf- und Sitzungsaufzeichnungen (UP-XDR) der Benutzerebene, die dieselbe Protokolladresse enthalten, zusammen angehäuft werden.

2. Anordnung nach Anspruch 1, bei der die Rufdatenaufzeichnungen (CP-CDR) der Steuerebene derart angehäuft sind, dass Ruf- und Sitzungsaufzeichnungen (CP-XDR) der Steuerebene einschließlich derselben Teilnehmerkennung zusammen angehäuft sind.

3. Anordnung nach Anspruch 1 oder 2, bei der, wenn mehr als ein Teilnehmerkennungsprotokoll-Adresspaar mit der gleichen Teilnehmerkennung vorhanden ist, Erzeugen einer angehäuften Ruf- und Sitzungsaufzeichnung der Benutzerebene für jede Teilnehmerkennung, wobei jede derartige angehäufte Ruf- und Sitzungsaufzeichnung der Benutzerebene weiterhin eine Adresse einer mobilen Internetprotokollebene umfasst.

4. Anordnung nach einem der vorhergehenden Ansprüche, bei der die Ruf- und Sitzungsaufzeichnungen (UP-XDR) der Benutzerebene derart angehäuft sind, dass Rufdatenaufzeichnungen CDR, (512) auf Basis der Rufdatenaufzeichnungen (CP-CDR) der Steuerebene und der angehäuften Ruf- und Sitzungsaufzeichnungen (UP-XDR) der Benutzerebene derart angehäuft werden, dass jede Rufdatenaufzeichnung (CP-CDR) der Steuerebene mit den angehäuften Ruf- und Sitzungsaufzeichnungen (UP-XDR) der Benutzerebene ergänzt werden.

5. Anordnung nach einem der vorhergehenden Ansprüche, bei der die Vielzahl der Ruf- und Sitzungsaufzeichnungen (CF-XDR) der Steuerebene für eine Vielzahl von Prozessorinstanzen (520) partitioniert (500) ist und die Anhäufung (520) der Rufdatenaufzeichnungen (CP-CDR) der Steuerebene und die Erzeugung (504) der Steuerebenen-Datenstruktur durch die Vielzahl der Prozessorinstanzen (520) ausgeführt wird, und die Vielzahl der Ruf- und Sitzungsaufzeichnungen (UPXDR) der Benutzerebene für eine Vielzahl weiterer Prozessorinstanzen (522) partitioniert ist und die Anhäufung (508) der Ruf - und Sitzungsaufzeichnungen (UPXDR) der Benutzerebene durch die Vielzahl der weiteren Prozessorinstanzen (522) ausgeführt wird.

6. Anordnung nach Anspruch 5, bei der die Vielzahl der Prozessorinstanzen (520) und die Vielzahl der weiteren Prozessorinstanzen (522) einen oder mehrere der folgenden umfasst: Kerne (600, 602, 604, 606) eines Mehrkern-Mikroprozessors (200), Mikroprozessoren (200A, 200B, 200C, 200D) innerhalb einer einzigen Rechnervorrichtung (700), Mikroprozessoren (200A, 200B, 200C, 200D) in wenigstens zwei separaten Rechenvorrichtungen (800, 802).

7. Anordnung nach Anspruch 5 oder 6, bei der die Partitionierung erfolgt, indem die Vielzahl der Ruf- und Sitzungsaufzeichnungen (CP-XDR) der Steuerebene in Steuerebenen-Fragmente (914, 916) und die Vielzahl der Ruf- und Sitzungsaufzeichnungen (UP-XDR) der Benutzerebene in Benutzerebenen-Fragmente (910, 912) fragmentiert wird, wobei jede Prozessorinstanz (520A, 520B) ihr Steuerebenenfragment (914, 916) verarbeitet und jede weitere Prozessorinstanz (522A, 522B) ihr Benutzerebenenfragment (910, 912) verarbeitet.

8. Anordnung nach einem der vorhergehenden Ansprüche, bei der die Teilnehmerkennung eine internationale Mobilteilnehmeridentität IMSI umfasst.

9. Anordnung nach einem der vorhergehenden Ansprüche, bei der die Protokolladresse eine Internetprotokoll-, IP-Adresse eines mobilen Teilnehmers umfasst, die durch die Teilnehmerkennung und eine GPRS-Tunnelbildungsprotokoll-Tunnelendpunktkennung (GP-TEID) identifiziert wird.

10. Anordnung nach einem der vorhergehenden Ansprüche, bei der die Verarbeitung in zwei parallelen Rechenpipelines ausgeführt wird, so dass die Vielzahl der Ruf- und Sitzungsaufzeichnungen (CP-XDR) der Steuerebene in einer ersten Stapeldatei für die erste Berechnungs-Pipeline bezogen wird und die Anhäufung der Rufdatenaufzeichnungen (CP-CDR) der Steuerebene und die Erzeugung der Steuerebenendatenstruktur in der ersten Berechnungs-Pipeline ausgeführt wird, und dass die Vielzahl der Ruf- und Sitzungsaufzeichnungen (UP-XDR) der Benutzerebene in einer zweiten Stapeldatei für die zweite Berechnungspipeline bezogen wird und die Anhäufung der Ruf- und Sitzungsaufzeichnungen (UP-XDR) der Benutzerebene in der zweiten Berechnungspipeline ausgeführt wird, woraufhin die Ergebnisse der Anhäufungen in einer Ergebnisdatei gespeichert werden, und schließlich die Berechnungs-Pipelines die nächsten ersten und zweiten Stapeldateien für die Verarbeitung beziehen.

11. Anordnung nach einem der vorhergehenden Ansprüche, bei der die Vielzahl der Ruf- und Sitzungsaufzeichnungen (CP-XDR) der Steuerebene aus einer ersten Verbindung (130) zwischen einem bedienenden Gateway (116) und einer Mobilitätsverwaltungseinheit (114) in dem überwachten Telekommunikationsnetzwerk (106) bezogen wird, und die Vielzahl der Ruf- und Sitzungsaufzeichnungen (UP-XDR) der Benutzerebene aus einer zweiten Verbindung (132) zwischen einer Basisstation (108) und einem bedienenden Gateway und/oder einem Paketdatennetzwerk-Gateway (116) in dem überwachten Telekommunikationsnetzwerk (106) bezogen wird.

12. Anordnung nach einem der vorhergehenden Ansprüche, bei der die Vielzahl der Ruf- und Sitzungsaufzeichnungen (CP-XDR) der Steuerebene und die Vielzahl der Ruf- und Sitzungsaufzeichnungen (UP-XDR) der Benutzerebene jeweils in einer Datei gespeichert sind, die kommagetrennte Werte CSV in Klartextform als Aufzeichnungen umfasst.

13. Computerprogrammcode, der auf einem computerlesbaren Medium (240) gespeichert ist, wobei der Computerprogrammcode (212), wenn er auf einer oder mehreren Computervorrichtungen ausgeführt wird, bewirkt, dass die eine oder mehreren Computervorrichtungen (800, 802) nach einem der vorhergehenden Ansprüche 1 bis 12 arbeiten.

14. Verfahren umfassend:
Beziehen (1102) einer Vielzahl von Ruf- und Sitzungsaufzeichnungen (CP-XDR) einer Steuerebene, die durch Analysieren der Kommunikation in einem überwachten Telekommunikationsnetzwerk erzeugt werden;
Anhäufen (1104) von Rufdatenaufzeichnungen (CP-CDR) der Steuerebene aus Ruf- und Sitzungsaufzeichnungen (CP-XDR) der Steuerebene auf der Basis einer Teilnehmerkennung, wobei jede Rufdatenaufzeichnung (CP-CDR) der Steuerebene eine Teilnehmerkennung als einen Schlüssel umfasst und weiterhin eine oder mehrere Protokolladressen eines mobilen Teilnehmers umfasst, die durch die Teilnehmerkennung identifiziert werden;
Erzeugen (1106) einer Steuerebenen-Datenstruktur, die Teilnehmerkennungs-Protokolladresspaare umfasst, die aus den Rufdatensätzen (CPCDR) der Steuerebene gesammelt werden;
Beziehen (1108) einer Vielzahl von Ruf- und Sitzungsaufzeichnungen (UP-XDR) einer Benutzerebene, die durch Analysieren der Kommunikation in dem überwachten Telekommunikationsnetzwerk erzeugt werden; und
Anhäufen (1110) der Ruf- und Sitzungsaufzeichnungen (UP-XDR) der Benutzerebene auf der Basis der Steuerebenendatenstruktur, so dass Ruf- und Sitzungsaufzeichnungen (UP-XDR) der Benutzerebene, die dieselbe Protokolladresse enthalten, zusammen angehäuft werden.

## Revendications

1. Agencement (100) comprenant :
un ou plusieurs processeurs (200) ; et
une ou plusieurs mémoires (210) comprenant un code de programme informatique (212),
les une ou plusieurs mémoires (210) et le code de programme informatique (212) étant configurés pour, avec les un ou plusieurs processeurs (200), amener l'agencement (100) au moins à :
obtenir une pluralité d'enregistrements d'appel et de session (CP-XDR, 138) d'un plan de commande produit par analyse de communication dans un réseau de télécommunication surveillé (106) ;
rassembler des enregistrements de données d'appel (CP-CDR) du plan de commande à partir d'enregistrements d'appel et de session (CP-XDR) du plan de commande sur la base d'un identifiant d'abonné, chaque enregistrement de données d'appel (CP-CDR) du plan de commande comprenant un identifiant d'abonné en tant que clé et
comprenant en outre une ou plusieurs adresses de protocole d'un abonné mobile identifié par l'identifiant d'abonné ;
créer une structure de données de plan de commande comprenant des paires identifiant d'abonné-adresse de protocole recueillies à partir des enregistrements de données d'appel (CP-CDR) du plan de commande ;
obtenir une pluralité d'enregistrements d'appel et de session (UP-XDR, 140) d'un plan d'utilisateur produit par analyse de communication dans le réseau de télécommunication surveillé (106) ; et
rassembler les enregistrements d'appel et de session (UP-XDR) du plan d'utilisateur sur la base de la structure de données de plan de commande de sorte que les enregistrements d'appel et de session (UP-XDR) du plan d'utilisateur comprenant la même adresse de protocole sont rassemblés.

2. Agencement selon la revendication 1, dans lequel les enregistrements de données d'appel (CP-CDR) du plan de commande sont rassemblés de sorte que les enregistrements d'appel et de session (CP-XDR) du plan de commande comprenant le même identifiant d'abonné sont rassemblés ensemble.

3. Agencement selon la revendication 1 ou 2, dans lequel s'il y a plus d'une paire identifiant d'abonné-adresse de protocole avec le même identifiant d'abonné, intervient la création d'un enregistrement d'appel et de session rassemblé du plan d'utilisateur pour chaque identifiant d'abonné, chaque enregistrement d'appel et de session rassemblé du plan d'utilisateur comprenant en outre une adresse de couche de protocole Internet mobile.

4. Agencement selon l'une quelconque des revendications précédentes, dans lequel les enregistrements d'appel et de session (UP-XDR) du plan d'utilisateur sont rassemblés de telle sorte que les enregistrements de données d'appel CDR (512) sont créés sur la base des enregistrements de données d'appel (CP-CDR) du plan de commande et des enregistrements d'appel et de session rassemblés (UP-XDR) du plan d'utilisateur, de sorte que chaque enregistrement de données d'appel (CP-CDR) du plan de contrôle est complété par les enregistrements d'appel et de session rassemblés (UP-XDR) du plan d'utilisateur.

5. Agencement selon l'une quelconque des revendications précédentes, dans lequel la pluralité des enregistrements d'appel et de session (CP-XDR) du plan de commande est partitionnée (500) pour une pluralité d'instances de processeur (520) et le rassemblement (520) des enregistrements de données d'appel (CP-CDR) du plan de commande et la création (504) de la structure de données du plan de commande sont effectués par la pluralité des instances de processeur (520), et dans lequel la pluralité des enregistrements d'appel et de session (UP XDR) du plan d'utilisateur est partitionnée pour une pluralité d'instances de processeur supplémentaires (522) et le rassemblement (508) des enregistrements d'appel et de session (UP XDR) du plan d'utilisateur est effectué par la pluralité des autres instances de processeur (522).

6. Agencement selon la revendication 5, dans lequel la pluralité des instances de processeur (520) et la pluralité d'instances de processeur supplémentaires (522) comprennent un ou plusieurs des éléments suivants : des coeurs (600, 602, 604, 606) d'un microprocesseur multicoeur (200), des microprocesseurs (200A, 200B, 200C, 200D) dans un appareil informatique unique (700), des microprocesseurs (200A, 200B, 200C, 200D) dans au moins deux appareils informatiques séparés (800, 802).

7. Agencement selon la revendication 5 ou 6, dans lequel la partition est effectuée en fragmentant la pluralité des enregistrements d'appel et de session (CP-XDR) du plan de commande en fragments de plan de commande (914, 916) et la pluralité d'enregistrements d'appel et de session (UP-XDR) du plan d'utilisateur en des fragments de plan d'utilisateur (910, 912), et dans lequel chaque instance de processeur (520A, 520B) traite son fragment de plan de commande (914, 916) et chaque instance de processeur supplémentaire (522A, 522B) traite son fragment de plan d'utilisateur (910, 912).

8. Agencement selon l'une quelconque des revendications précédentes, dans lequel l'identifiant d'abonné comprend une identité d'abonné mobile internationale, IMSI.

9. Agencement selon l'une quelconque des revendications précédentes, dans lequel l'adresse de protocole comprend une adresse de protocole Internet IP d'un abonné mobile identifié par l'identifiant d'abonné et un identifiant de point d'extrémité de tunnel de protocole de liaison tunnel GPRS (GP-TEID).

10. Agencement selon l'une quelconque des revendications précédentes, dans lequel le traitement est effectué dans deux pipelines de calcul parallèles de telle sorte que la pluralité des enregistrements d'appel et de session (GP-XOR) du plan de commande est obtenue dans un premier fichier de lots pour le premier pipeline de calcul, et le rassemblement des enregistrements de données d'appel (CP-COR) du plan de contrôle et la création de la structure de données de plan de contrôle sont effectués dans le premier pipeline de calcul, et en ce que la pluralité des enregistrements d'appel et de session (UP-XOR) du plan d'utilisateur est obtenue dans un second fichier de lots pour le second pipeline de calcul, et le rassemblement des enregistrements d'appel et de session (UP-XOR) du plan d'utilisateur est effectuée dans le second pipeline de calcul, après quoi les résultats du rassemblement sont stockés dans un fichier de résultats, et, enfin, les pipelines de calcul obtiennent les premier et second fichiers de lots suivants pour le traitement.

11. Agencement selon l'une quelconque des revendications précédentes, dans lequel la pluralité des enregistrements d'appel et de session (GP-XDR) du plan de commande est obtenue à partir d'une première liaison (130) entre une passerelle de desserte (116) et une entité de gestion de mobilité (114) dans le réseau de télécommunication surveillé (106), et la pluralité des enregistrements d'appel et de session (UP-XDR) du plan d'utilisateur est obtenue à partir d'une seconde liaison (132) entre une station de base (108) et une passerelle de desserte et/ou une passerelle de réseau de données par paquets (116) dans le réseau de télécommunication surveillé (106).

12. Agencement selon l'une quelconque des revendications précédentes, dans lequel la pluralité des enregistrements d'appel et de session (GP-XDR) du plan de commande et la pluralité des enregistrements d'appel et de session (UP-XDR) du plan d'utilisateur sont stockées chacune dans un fichier incluant les valeurs séparées par des virgules, CSV, sous forme de texte brut en tant qu'enregistrements.

13. Code de programme informatique stocké sur un support lisible par ordinateur (240), lequel code de programme informatique (212), lorsqu'il est exécuté sur un ou plusieurs appareils informatiques, amène le ou les appareils informatiques (800, 802) à fonctionner selon l'une quelconque des revendications précédentes 1 à 12

14. Procédé, comprenant :
l'obtention (1102) une pluralité d'enregistrements d'appel et de session (CP-XDR) d'un plan de commande produit en analysant une communication dans un réseau de télécommunication surveillé ;
le rassemblement (1104) d'enregistrements de données d'appel (CP-CDR) du plan de commande à partir d'enregistrements d'appel et de session (CP-XDR) du plan de commande sur la base d'un identifiant d'abonné, chaque enregistrement de données d'appel (CP-CDR) du plan de commande comprenant un identifiant d'abonné en tant que clé et comprenant en outre une ou plusieurs adresses protocolaires d'un abonné mobile identifié par l'identifiant d'abonné ;
la création (1106) d'une structure de données de plan de commande comprenant des paires identifiant d'abonné-adresse de protocole rassemblées à partir des enregistrements de données d'appel (CP-CDR) du plan de commande ;
l'obtention (1108) d'une pluralité d'enregistrements d'appel et de session (UP-XDR) d'un plan d'utilisateur produit par analyse de communication dans le réseau de télécommunication surveillé ; et
le rassemblement (1110) des enregistrements d'appel et de session (UP-XDR) du plan d'utilisateur sur la base de la structure de données de plan de commande de sorte que les enregistrements d'appel et de session (UP-XDR) du plan d'utilisateur comprenant la même adresse de protocole sont rassemblés ensemble.
